# EUROPÄISCHE PATENTSCHRIFT

(11) **EP 2 463 480 B1**
(45) Veröffentlichungstag und Bekanntmachung des Hinweises auf die Patenterteilung: **10.10.2018**
(21) Anmeldenummer: 11009441.4
(22) Anmeldetag: 29.11.2011
(51) Int. Cl.: F01D 5/14, F04D 29/38

(54) **Schaufel mit hybrider Profilgestaltung**
Blade with hybrid airfoil
Aube avec profile hybride

(30) Priorität: 08.12.2010 DE 102010053798
(43) Veröffentlichungstag der Anmeldung: 13.06.2012
(73) Patentinhaber: Rolls-Royce Deutschland Ltd & Co KG, 15827 Blankenfelde-Mahlow (DE)
(72) Erfinder: Gümmer, Volker, Dr., 85411 Hohenkammer (DE)
(74) Vertreter: Hoefer & Partner Patentanwälte mbB

(56) Entgegenhaltungen:
- EP-A2- 1 998 049
- WO-A1-2005/040559
- DE-A1-102009 023 100
- US-A- 2 045 383
- US-A1- 2005 129 518
- US-B1- 7 396 208

## Beschreibung

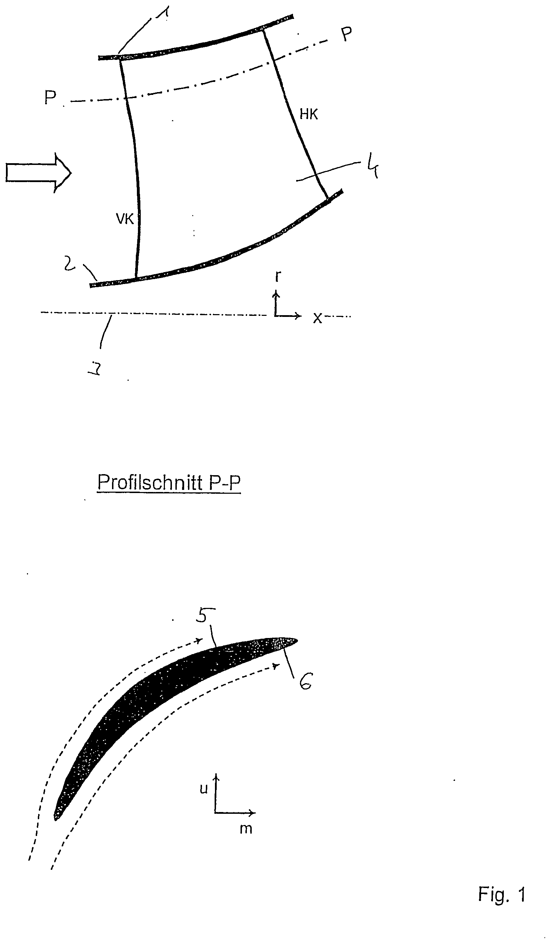

Die vorliegende Erfindung bezieht sich auf Schaufeln von Strömungsmaschinen wie Bläser, Verdichter, Pumpen, Ventilatoren und Turbinen axialer, halbaxialer und radialer Bauart mit gasförmigem oder flüssigem Arbeitsmedium. Die Strömungsmaschine kann eine oder mehrere Stufen mit jeweils einem Rotor und einem Stator umfassen, in Einzelfällen wird die Stufe lediglich durch einen Rotor gebildet. Die Rotorschaufeln und Statorschaufeln sind in einem Hauptströmungspfad angeordnet, der von Hauptströmungspfadberandungen, üblicherweise einer Gehäusekontur außen und einer Nabenkontur innen, berandet wird.
Der Rotor besteht aus einer Anzahl von Schaufeln, die mit der rotierenden Welle der Maschine verbunden sind. Der Rotor kann mit oder ohne Deckband am äußeren Schaufelende ausgeführt sein.
Der Stator besteht aus einer Anzahl feststehender Schaufeln, die nabenseitig wie gehäuseseitig mit festem oder freiem Schaufelende ausgeführt sein können.
Die Rotortrommel und die Beschaufelung sind üblicherweise von einem die äußere Hauptströmungspfadberandung bildenden Gehäuse umgeben, in anderen erfindungsgemäßen Fällen, z. B. bei Propellern oder Schiffsschrauben, existiert kein Gehäuse und die äußere Hauptströmungspfadberandung wird durch die äußerste, die Schaufelspitze des Rotors tangierende Meridianstromlinie gebildet.
Die Strömung in Schaufelreihen aerodynamisch hoch belasteter Strömungsmaschinen zeichnet sich durch eine sehr hohe zu erreichende Strömungsumlenkung aus. Die erforderliche Strömungsumlenkung kann entweder in Teilen der Schaufelhöhe oder entlang der gesamten Schaufelhöhe so hoch werden, dass ein konventionelle, nach dem Stand der Technik ausgeführte Gestalt der Schaufelprofilschnitte zu frühzeitiger Ablösung der Grenzschichtströmung auf dem Schaufelprofil und im Seitenwandbereich an Nabe und Gehäuse führt.
Übliche Schaufeln, wie sie in Fig.1 dargestellt sind, ohne zusätzliche Gestaltungsmerkmale zur Stabilisierung der Profil- und Wandgrenzschichten, sind aufgrund extrem hoher Druckverluste und der Nichterreichung der angestrebten Strömungsumlenkung ungeeignet. Zudem werden die im Bereich der begrenzenden Seitenwände (an Nabe 2 und Gehäuse 1) auftretenden Sekundärströmungen unbeherrschbar und führen zu weiteren sehr hohen Totaldruckverlusten. Die Konsequenz ist ein insgesamt schlechtes Leistungsverhalten der Strömungsmaschine im Hinblick auf den Wirkungsgrad und die verfügbare Stabilitätsmarge.

Schaufelreihen mit einer Profilgestaltung nach dem Stand der Technik, siehe Fig.1, besitzen somit aufgrund der starken auftretenden aerodynamischen Belastung der Grenzschichten, d.h. der zweidimensionalen Grenzschichten auf dem Profil und der dreidimensionalen Grenzschichten an Nabe- und Gehäusewand, einen zu geringen Arbeitsbereich und zu hohe Verluste, um die in modernen Strömungsmaschinen erforderlichen Betriebskennwerte zu erbringen.

Die WO 2005/040559 A1 beschreibt eine hybride Schaufelgestaltung mit zwei oder mehr Profilen, welche sich zumindest über einen Teil der Schaufellänge erstrecken.

Aus der EP 1 998 049 A2 ist eine Strömungsarbeitsmaschinenschaufel mit Multi-ProfilGestaltung bekannt.

Eine ähnliche Ausgestaltung zeigt auch die DE 10 2009 023 100 A1, wobei in den Schaufeln Schlitze ausgebildet sind, welche sich durchgängig über die gesamte Schaufellänge erstrecken.

Aus der US 7,396,208 B1 ist eine Schaufelausgestaltung bekannt, bei welcher ein Teil der Schaufel geschlitzt und gespreizt ist, wobei sich keine Hybridprofile ergeben.

Eine weitere Ausgestaltung von Hybridprofilen zeigt die US 2,045,383 A. Auch hierbei sind die einzelnen Schaufeln über ihre gesamte Länge als Hybridprofile ausgestaltet.

Der Erfindung liegt die Aufgabe zugrunde, eine Strömungsmaschine zu schaffen, welche sich durch einen höheren Wirkungsgrad auszeichnet.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit für den Einsatz der Strömungsmaschine eine Schaufel geschaffen, die in einem Hauptströmungspfad mit der Hauptströmungspfadweite W angeordnet ist und entlang der Schaufelhöhe in den inneren Randbereich IRB (zwischen der inneren Hauptströmungspfadberandung und einem nahegelegenen inneren Meridianstromlinienprofilschnitt MSLi), den äußeren Randbereich (zwischen der äußeren Hauptströmungspfadberandung und einem nahegelegenen äußeren Meridianstromlinienprofilschnitt MSLo) und in den Zentralbereich (zwischen dem inneren Meridianstromlinienprofilschnitt MSLi und dem äußeren Meridianstromlinienprofilschnitt MSLo) unterteilt ist, wobei wenigstens einer der Meridianstromlinienprofilschnitte MSLi und MSLo in einem Abstand von 35% der Hauptströmungspfadweite von der jeweiligen Hauptströmungspfadberandung vorgesehen ist, wobei es besonders günstig ist, wenn wenigstens einer der Meridianstromlinienprofilschnitte MSLi und MSLo in einem Abstand von 20% der Hauptströmungspfadweite von der jeweiligen Hauptströmungspfadberandung vorgesehen ist, wobei die Schaufel in wenigstens Teilen des Zentralbereiches eine Multiprofilgestalt aufweist, derart, dass mindestens zwei in Strömungsrichtung hintereinander angeordnete Teilprofile vorgesehen sind, von denen jedes einzelne im Wesentlichen die Form eines Schaufelprofils mit strömungsgünstig geformter Vorderkante besitzt, wobei jeweils zwischen zwei Teilprofilen ein Durchlass gegeben ist, der von der Schaufeldruckseite zur Schaufelsaugseite von Fluid durchströmt wird, wobei wenigstens ein Durchlass entlang der Schaufelhöhe eine veränderliche Durchlassweite aufweist, die durch den kleinsten zwischen den Konturen zweier benachbarter Teilprofile messbaren Abstand gegeben ist, wobei der Verlauf der Durchlassweite entlang der Schaufelhöhe in wenigstens einem der inneren und äußeren Randbereiche ein Maximum, annimmt, wobei die Gestalt der Meridianstromlinienprofilschnitte der Schaufel, betrachtet entlang der Schaufelhöhe, innerhalb wenigstens eines der inneren und äußeren Randbereiche vom Typ "Multiprofil" zum Typ "Einzelprofil" übergeht und der mindestens eine Durchlass auf diese Weise dort endet, wobei in Schaufelhöhenrichtung stets ein verbleibender Abstand zwischen dem Rand des Durchlasses auf der Schaufeldruckseite und dem innersten beziehungsweise äußersten Schaufelschnitt vorgesehen ist. Dabei ist insbesondere vorgesehen, dass die saugseitige Flankenflächenkante wenigstens teilweise näher an der Hauptströmungspfadberandung des betreffenden Randbereiches angeordnet ist, als die druckseitige Flankenflächenkante und auf diese Weise ein gegen die Umfangsrichtung u und/oder gegen die Meridianrichtung m und in Strömungsrichtung zur Hauptströmungspfadrandung hin geneigter Verlauf der Flankenfläche gegeben ist.

Dabei ist einer der Randbereiche IRB und ARB an einem festen mit Deckband oder Schaufelfuß versehenen Schaufelende vorgesehen und dort geht die Gestalt der Meridianstromlinienprofilschnitte vom Typ "Multiprofil" zum Typ "Einzelprofil" über.

Im Folgenden wird die Erfindung anhand von Ausführungsbeispielen in Verbindung mit den Figuren beschrieben. Dabei zeigt:
- Fig. 1: eine schematische Darstellung einer Schaufel nach dem Stand der Technik,
- Fig. 2: Ausführungsbeispiele erfindungsgemäßer Schaufeln in der Meridianansicht,
- Fig. 3: ein Ausführungsbeispiel einer Multi-Profil-Gestalt im Stromlinienprofilschnitt X-X der Fig.2, Teilabbildungen (a.) und (b.),
- Fig. 4: die Definition von Meridianstromlinien und Meridianstromlinienprofilschnitten

- Fig. 5a: ein nicht zur Erfindung gehörendes Beispiel einer Schaufel in der Meridianansicht (links) und Meridianstromlinienprofilschnitte (rechts),
- Fig. 5b: einen Meridianstromlinienprofilschnitt gemäß Ansicht A-A aus Fig.5a,
- Fig. 5c: ein nicht zur Erfindung gehörendes Beispiel einer Schaufel in räumlicher Ansicht der Druckseite (oben) und der Saugseite (unten),
- Fig. 5d: ein nicht zur Erfindung gehörendes Beispiel mit weiteren Schaufeln in räumlicher Ansicht der Druckseite (oben) und der Saugseite (unten),
- Fig. 5e: Ausführungsbeispiele erfindungsgemäßer Schaufeln in räumlicher Ansicht der Druckseite (oben) und der Saugseite (unten),
- Fig. 6a: weitere Ausführungsbeispiele erfindungsgemäßer Schaufeln in Meridianansicht (oben) und Meridianstromlinienprofilschnitte (unten),
- Fig. 6b: weitere Ausführungsbeispiele erfindungsgemäßer Schaufeln in räumlicher Ansicht der Druckseite (oben) und der Saugseite (unten),
- Fig. 6c: weitere nicht zur Erfindung gehörende Beispiele von Schaufeln in Meridianansicht (oben) und Meridianstromlinienprofilschnitte (unten),
- Fig. 6d: weitere nicht zur Erfindung gehörende Beispiele von Schaufeln in räumlicher Ansicht der Druckseite (oben) und der Saugseite (unten),
- Fig. 7a: einen Verlauf der Durchlassweite entlang der Schaufelhöhe, mit Maximum im inneren oder äußeren Randbereich, und
- Fig. 7b: einen Verlauf der Durchlassweite entlang der Schaufelhöhe, mit Minimum im Zentralbereich.
Eine konventionelle Schaufel nach dem Stand der Technik, wie sie in Fig.1 gezeigt ist, besitzt keine über einem ausgewählten Teil der Schaufelhöhe vorgesehene Unterteilung in mehrere nacheinander angeordnete Profile. Bekannt sind lediglich sogenannte Tandemkonfigurationen, bei denen eine Umlenkaufgabe durch zwei baulich voneinander getrennte Schaufelreihen erfüllt wird.
Die rechte Seite der Fig.1 zeigt einen Profilschnitt der auf der linken Bildseite im Meridianschnitt dargestellten Schaufel. Im Meridianschnitt erfolgt die Anströmung, angedeutet durch den dicken Pfeil, von links nach rechts. Bei konventionellen Schaufeln verläuft die Strömung um die einzelnen Profilschnitte der Schaufeln (siehe Profilschnitt P-P) von der Vorderkante an getrennt und ohne Fluidkommunikation zwischen den Schaufelseiten.

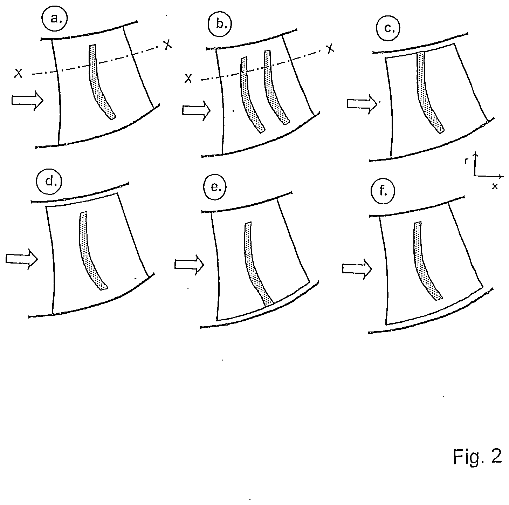

Die Fig.2 zeigt Beispiele erfindungsgemäßer Schaufeln in der durch die Axialkoordinate x und die Radialkoordnate r gebildeten Meridianebene. Alle Teilabbildungen zeigen die Ansicht der Schaufeldruckseite.
Die Teilabbildung (a) zeigt eine erfindungsgemäße Schaufel mit zwei festen Schaufelenden. Dies kann ein Rotor 11 sein, bei dem eine Plattform mit Fuß die innere Hauptströmungspfadberandung (Nabe 2) und ein Deckband die äußeren Hauptströmungspfadberandung bildet. Dies kann aber auch ein Stator 12 sein, bei dem ein Deckband die innere Hauptströmungspfadberandung und eine Plattform mit Fuß die äußere Hauptströmungspfadberandung bildet. Beide festen Schaufelenden besitzen hier eine Einzelprofilgestalt, an die sich zur Schaufelmitte hin eine Zone mit Multiprofilgestalt (in diesem Fall mit zwei Teilprofilen) anschließt. Der Schaufelbereich mit Multiprofilgestalt ist schematisch durch den als gepunktete Fläche dargestellten Durchlass zwischen zwei Teilprofilen kenntlich gemacht. Erfindungsgemäß reicht der Durchlass beziehungsweise die Multiprofilgestalt auf der dargestellten Schaufeldruckseite nicht bis an die Hauptströmungspfadberandung heran, sondern grenzt in einem bestimmten Abstand vom innersten beziehungsweise äußersten Schnitt der Schaufel an einen Schaufelabschnitt mit Einzelprofilgestalt.

Die Teilabbildung (b) zeigt eine erfindungsgemäße Variante mit drei Teilprofilen und entsprechend 2 Durchlässen. Die Teilabbildungen (c) bis (f) zeigen erfindungsgemäße Schaufelkonfigurationen mit nur einem Durchlass, jedoch sind auch hier Anordnungen mit mehr als einem Durchlass erfindungsgemäß.

Die Teilabbildungen (c) und (d) zeigen eine erfindungsgemäße Schaufel mit einem festen Schaufelende an der Nabe 2 und einem freien äußeren Schaufelende. Dies kann ein Rotor sein, bei dem eine Plattform mit Fuß die innere Hauptströmungspfadberandung (Nabe 2) bildet und ein Laufspalt an der äußeren Hauptströmungspfadberandung (Gehäuse 1) vorgesehen ist. Dies kann aber auch ein Stator sein, bei dem eine Plattform mit Fuß die innere Hauptströmungspfadberandung (Nabe 2) bildet und ein Spalt an der äußeren Hauptströmungspfadberandung (Gehäuse 1) vorgesehen ist. Die gewählte Darstellung umfasst einen Laufspalt und ein die Schaufelreihe umgebendes Gehäuse. Erfindungsgemäß ist aber auch eine nicht ummantelte Konfiguration ohne Gehäuse. Erfindungsgemäß reicht in jedem der beiden Fälle der Schaufelbereich mit Multiprofilgestalt auf der Schaufeldruckseite am festen Schaufelende nicht bis an die Hauptströmungspfadberandung heran, sondern grenzt in einem bestimmten Abstand von der Hauptströmungspfadberandung an eine Zone mit Einzelprofilgestalt.

Die Teilabbildungen (e) und (f) zeigen eine erfindungsgemäße Schaufel mit einem festen Schaufelende am Gehäuse 1 und einem freien Schaufelende an der Nabe 2. Dies kann ein Stator 12 sein, bei dem eine Plattform mit Fuß die äußere Hauptströmungspfadberandung (Gehäuse) bildet und ein Spalt an der inneren Hauptströmungspfadberandung (Nabe) vorgesehen ist. Erfindungsgemäß reicht in jedem der beiden Fälle der Schaufelbereich mit Multiprofilgestalt auf der Schaufeldruckseite am festen Schaufelende nicht bis an die Hauptströmungspfadberandung heran, sondern grenzt in einem bestimmten Abstand von der Hauptströmungspfadberandung an eine Zone mit Einzelprofilgestalt.

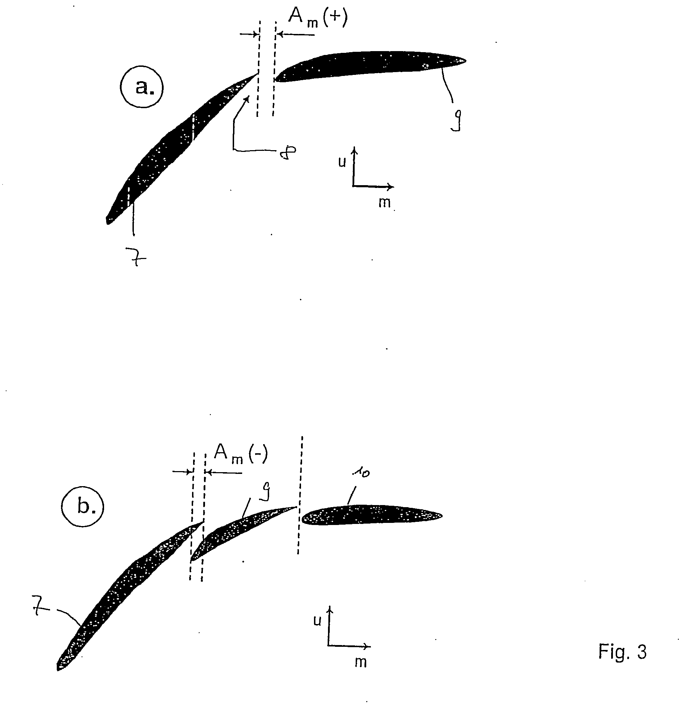

Die Fig.3 zeigt in dem in Fig.2, Teilabbildungen (a) und (b), markierten Stromlinienprofilschnitt X-X die Profilanordnung im Bereich der Schaufel mit Multiprofilgestalt. So kann dort erfindungsgemäß eine Anordnung mit nur zwei Teilprofilen (einem Front-Profil 7 und einem ersten Nachprofil 9), siehe Teilabbildung 3(a), oder in einem besonderen Fall eine Anordnung mit N > 2 Teilprofilen (einem Front-Profil 7 und N-1 Nachprofilen 9, 10) vorgesehen sein, siehe Teilabbildung 3(b). Der meridionale Abstand Am zwischen der Hinterkante eines Teilprofils und der Vorderkante des stromab benachbart angeordneten Teilprofils kann erfindungsgemäß entlang der Schaufelhöhe variieren und sowohl positive als auch negative Werte annehmen (einschließlich des Wertes null). Bei positiven Am entsteht in der Meridianansicht (x-r-Ebene) eine in Umfangsrichtung u durchblickbare Lücke zwischen zwei Teilprofilen. Es kann aber auch besonders günstig sein, negative Werte von Am vorzusehen; dann überlappen benachbarte Teilprofile und bilden eine kanalartige Strömungspassage zwischen sich, die in besonderen Fällen die Form einer konvergenten Düse besitzt. Negative Werte von Am sind insbesondere in dem Bereich der Schaufelhöhe günstig, in dem die Multiprofilgestalt in die Einzelprofilgestalt übergeht. Erfindungsgemäß günstig ist es, wenn der meridionale Abstand Am ausgehend von einem Ort im Zentralbereich der Schaufel in Richtung wenigstens eines Schaufelendes kontinuierlich bis zum Ort des Übergangs von Multiprofilgestalt zur Einzelprofilgestalt abnimmt. Eine besonders günstige Anordnung sieht dabei wenigstens direkt am Ort des Übergangs von Multiprofilgestalt zur Einzelprofilgestalt und in einem an den Übergang grenzenden Teil der Schaufelhöhe negative Werte von Am vor.

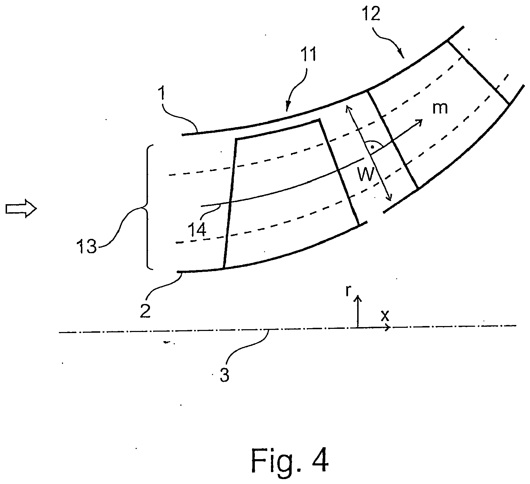

Fig.4 gibt eine genaue Definition der Meridianstromlinien und der Meridianstromlinienprofilschnitte. Die mittlere Meridianstromlinie 14 wird durch die geometrische Mitte des Hauptströmungspfades gebildet. Für den Fall, dass kein Gehäuse 1 existiert, dient die äußerste, die Schaufelspitze tangierende Meridianstromlinie als äußere Begrenzung des Hauptströmungspfades. Errichtet man an jedem Ort der mittleren Meridianstromlinie 14 eine Normale, so ergibt sich entlang dieser die Hauptströmungspfadweite W, und es können durch gleiche relative Unterteilung der Normalen weitere Meridianstromlinien ermittelt werden. Der Schnitt einer Meridianstromlinie mit einer Schaufel ergibt einen Meridianstromlinienprofilschnitt. Weitere Betrachtungen der erfindungsgemäßen Schaufel erfolgen auf der Grundlage von Meridianstromlinienprofilschnitten.

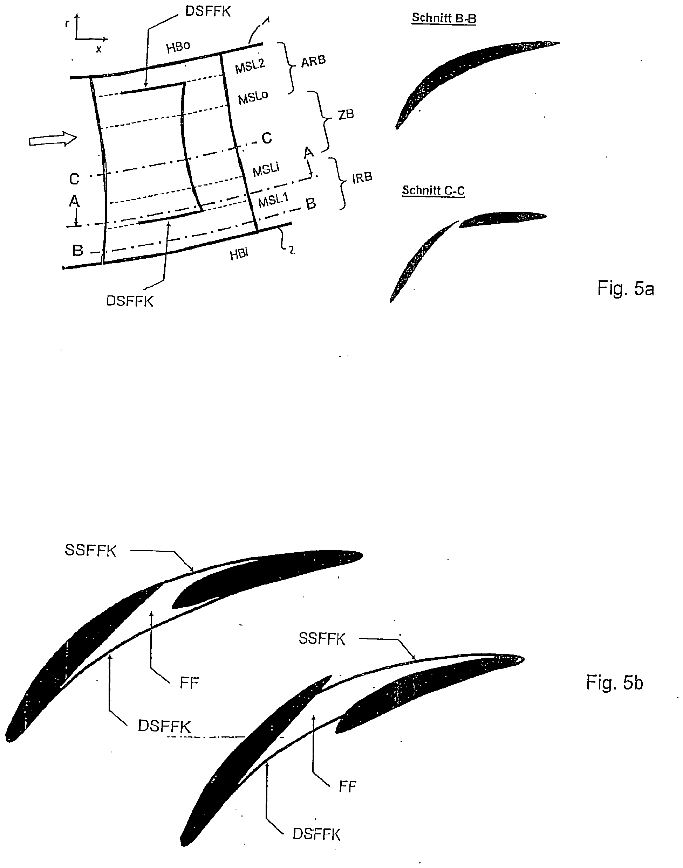

Die Fig.5a zeigt auf der linken Bildseite eine nicht zur Erfindung gehörende Schaufel in der Meridianansicht (x-r-Ebene) mit Blick auf die Druckseite 6 der Schaufel. Die Schaufel ist entlang ihrer Schaufelhöhe (beziehungsweise in Richtung der Hauptströmungspfadweite) in drei Bereiche unterteilt. So befindet sich der Zentralbereich ZB zwischen dem Meridianstromliniensprofilschnitt MSLi bei 35% der Hauptströmungspfadweite und dem Meridianstromliniensprofilschnitt MSLo bei 65% der Hauptströmungspfadweite. Noch günstiger ist jedoch ein Zentralbereich ZB zwischen einem Meridianstromliniensprofilschnitt MSLi bei 20% der Hauptströmungspfadweite und einem Meridianstromliniensprofilschnitt MSLo bei 80% der Hauptströmungspfadweite. Die Hauptströmungsrichtung ist durch einen dicken Pfeil gekennzeichnet. Der innere Randbereich der Schaufel IRB befindet sich zwischen der inneren Hauptströmungspfadberandung HBi und dem Meridianstromliniensprofilschnitt MSLi. Der äußere Randbereich der Schaufel ARB befindet sich zwischen dem Meridianstromliniensprofilschnitt MSLo und der äußeren Hauptströmungspfadberandung HBo. Im Bereich zwischen dem markierten Meridianstromlinienprofilschnitt MSL1, der sich an einem beliebigen Ort innerhalb des inneren Randbereiches IRB befindet, und dem markierten Meridianstromlinienprofilschnitt MSL2, der sich an einem beliebigen Ort innerhalb des äußeren Randbereiches ARB befindet, besitzt die hier dargestellte Schaufel eine Multiprofilgestalt. In mindestens einem der Randbereiche IRB und ARB ist bei Betrachtung der Schaufelprofilgeometrieänderungen in Richtung der jeweiligen Hauptströmungspfadberandung ein Übergang von Multiprofilgestalt zu Einzelprofilgestalt vorgesehen. Die hier dargestellte Variante der Schaufel besitzt in dem dargestellten Schnitt B-B eine Einzelprofilgestalt und in dem dargestellten Schnitt C-C eine Multiprofilgestalt. Es kann günstig sein, wenn der Übergang von Multiprofilgestalt zu Einzelprofilgestalt im Wesentlichen oder sogar exakt auf einem Meridianstromlinienprofilschnitt (wie im Zusammenhang mit Fig.4 definiert) vorgesehen ist. Gemäß der gegebenen Definition liegt jeder Meridianstromlinienprofilschnitt auf einer rotationssymmetrischen Fläche. Der durch die Multiprofilgestalt gebildete Durchlass wird an dem Übergang von Multiprofilgestalt zur Einzelprofilgestalt von einer Flankenfläche FF berandet, deren druckseitige Kante in Fig.5a als Linie in Erscheinung tritt. Die Flankenfläche FF liegt im Fall der hier gezeigten Variante einer Schaufel vollständig auf einem Meridianstromlinienprofilschnitt, das heißt auf einer Kegelfläche mit der Achse der Strömungsmaschine als Mittelachse.
Die Fig.5b zeigt in der in Fig.5a eingezeichneten Ansicht A-A eine Draufsicht auf die Flankenfläche FF, die sich als Begrenzung des Durchlasses am Rand des Einzelprofilgestaltbereiches der Schaufel ergibt. Dabei kann, wie in der Fig.5b oben dargestellt, in stromlinienprofilschnitt-orthogonaler Betrachtung der Übergang von Multiprofilgestalt zu Einzelprofilgestalt glatt verlaufen, derart, dass am Ort des Übergangs von Multiprofilgestalt zu Einzelprofilgestalt die Profilkontur des Einzelprofils die Teilprofile der Multiprofilanordnung einhüllt und wenigstens teilweise gemeinsame Konturabschnitte mit den Teilprofilen der Multiprofilanordnung bildet, oder es kann, wie in der Fig.5b unten dargestellt, in stromlinienprofilschnitt-orthogonaler Betrachtung am Übergang von Multiprofilgestalt zu Einzelprofilgestalt eine Hinterkante und/oder eine Vorderkante eines Teilprofils im Multiprofilbereich über die Profilkontur des angrenzenden Einzelprofilbereiches hinausragen.

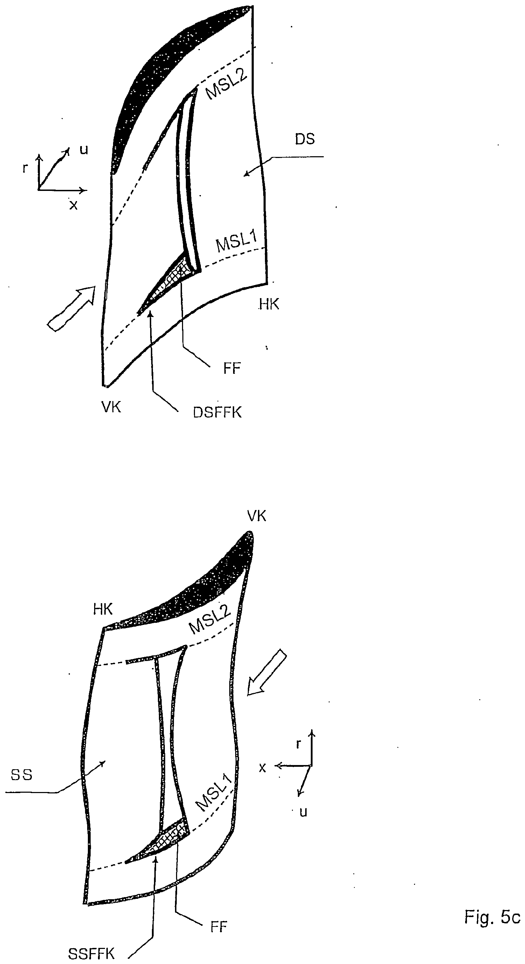

Die Fig.5c zeigt zwei räumliche Ansichten der Schaufel von Fig.5a und 5b. Es ist hier das Beispiel einer Schaufel gemäß Fig.5b.oben, d.h. ohne überstehende Vorder- und/oder Hinterkante im Multiprofilbereich, gewählt. Die beiden räumlichen Ansichten lassen den Durchlass, die Multiprofilgestalt in der Zone des Durchlasses und die Flankenfläche FF, hier schraffiert gekennzeichnet, erkennen. Auf der linken Bildseite ist eine druckseitige Ansicht, auf der rechten Bildhälfte eine saugseitige räumliche Ansicht der Schaufel gegeben. Sowohl auf der Druckseite DS der Schaufel als auch auf der Saugseite SS der Schaufel liegen die Kanten der Flankenfläche (DSFFK und SSFFK) auf demselben Meridianstromlinienprofilschnitt MSL1. In der hier dargestellten Variante der Schaufel reicht die Flankenfläche beziehungsweise ihre druckseitige Kante DSFFK in meridionaler Richtung nicht stromaufwärts bis zur Vorderkante eines Teilprofils.

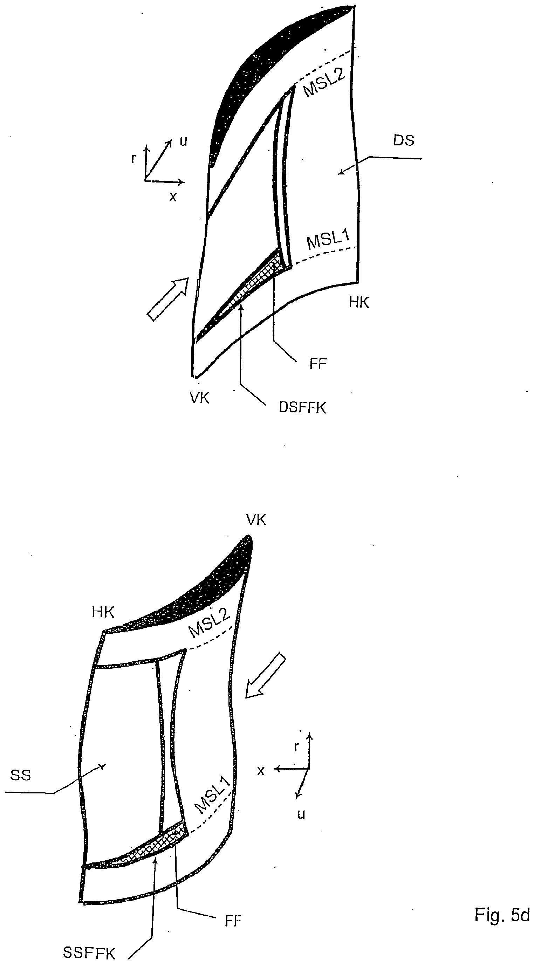

Die Fig.5d zeigt in der oberen Bildhälfte die räumliche druckseitige Ansicht einer Schaufel, bei der die Flankenfläche FF beziehungsweise ihre Kante DSFFK auf der Druckseite in die unmittelbare Nähe beziehungsweise direkt bis an die Vorderkante eines Teilprofils reicht. Die Fig.5d zeigt in der unteren Bildhälfte die räumliche saugseitige Ansicht einer Schaufel, bei der die Flankenfläche FF auf der Saugseite 5 beziehungsweise ihre Kante SSFFK in die unmittelbare Nähe beziehungsweise direkt bis an die Hinterkante eines Teilprofils reicht.

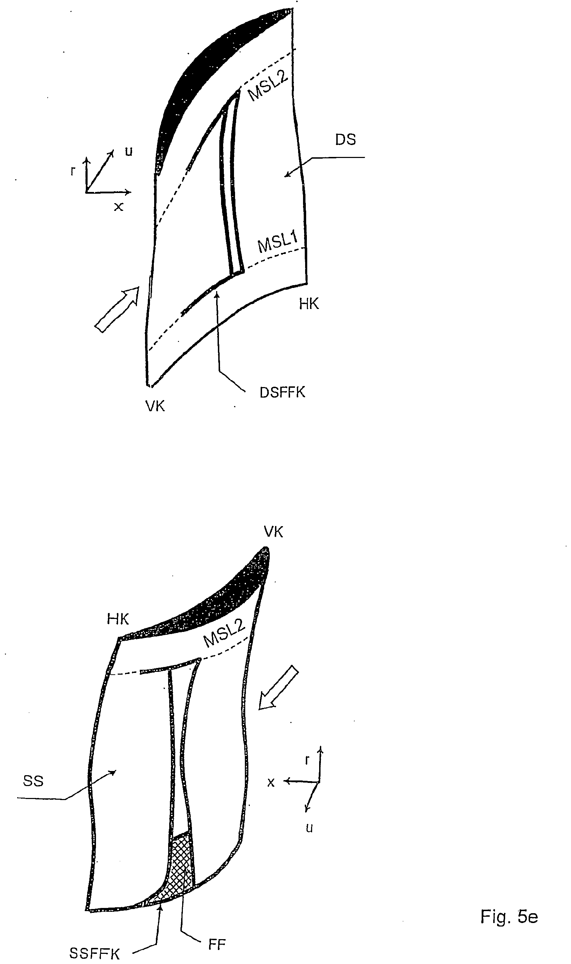

Die Fig.5e zeigt in der oberen Bildhälfte die räumliche druckseitige Ansicht einer erfindungsgemäßen Schaufel, bei der die Flankenfläche FF auf der Druckseite 6, wie in Fig.5d, erst stromab der Vorderkante eines Teilprofils beginnt. Die druckseitige Kante der Flankenfläche FF liegt auch hier vollständig in einem Meridianstromlinienprofilschnitt MSL1.
Die untere Bildhälfte zeigt den erfindungsgemäßen Fall, dass die saugseitige Kante SSFFK der Fankenfläche FF wenigstens teilweise näher am Schaufelende beziehungsweise näher an der Hauptströmungspfadberandung liegt als die druckseitige Kante DSFFK der Flankenfläche FF. Auf diese Weise ergibt sich, bezogen auf die Umfangsrichtung u und/oder die Meridianrichtung m der Strömungsmaschine ein zur Hauptströmungspfadberandung des betreffenden Schaufelendes geneigter Verlauf der Flankenfläche FF. Dabei ist es erfindungsgemäß günstig, wenn die SSFFK vollständig näher am Schaufelende beziehungsweise näher an der Hauptströmungspfadberandung liegt als die DSFFK. Besonders günstig ist es, wenn die SSFFK im Wesentlichen oder genau am Schaufelende beziehungsweise an der Hauptströmungspfadberandung liegt.

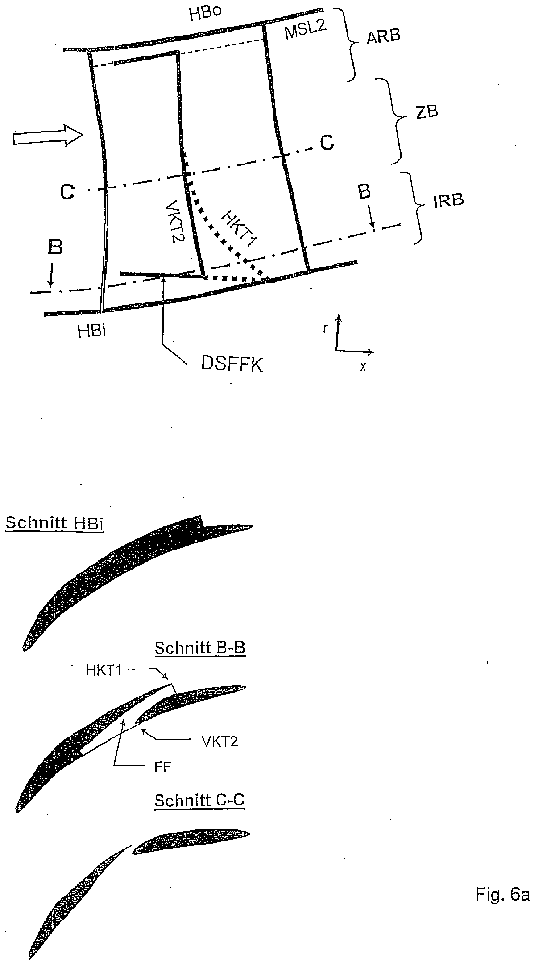

Die Fig.6a zeigt auf der linken Bildseite eine erfindungsgemäße Schaufel in der Meridianansicht (x-r-Ebene) mit Blick auf die Druckseite 6 der Schaufel. Die Hauptströmungsrichtung ist durch einen dicken Pfeil gekennzeichnet. In mindestens einem der Randbereiche IRB und ARB ist bei Betrachtung der Schaufelprofilgeometrieänderungen in Richtung der jeweiligen Hauptströmungspfadberandung ein Übergang von Multiprofilgestalt zu Einzelprofilgestalt vorgesehen. Die hier gezeigte Variante der erfindungsgemäßen Schaufel besitzt in dem dargestellten Schnitt C-C eine Multiprofilgestalt und nahe der inneren Hauptströmungspfadberandung HBi eine Einzelprofilgestalt. Wie hier dargestellt, kann es erfindungsgemäß vorteilhaft sein, wenn der Verlauf der druckseitigen Kante DSFFK der Flankenfläche und/oder der Verlauf der Flankenfläche FF selbst sich in Strömungsrichtung einem Schaufelende beziehungsweise einer Hauptströmungspfadberandung annähert und somit gegenüber den Meridianstromlinienprofilschnitten der Schaufel geneigt vorgesehen ist. Günstig ist es dabei, wenn auch der Verlauf der saugseitigen Kante SSFFK der Flankenfläche sich in Strömungsrichtung einem Schaufelende beziehungsweise einer Hauptströmungspfadberandung annähert und somit gegenüber einem Meridianstromlinienprofilschnitt geneigt vorgesehen ist. Erfindungsmäßig besonders günstig ist es, wenn wenigstens eine der DSFFK und SSFFK, und/oder die Flankenfläche FF mit wenigstens einem Teilabschnitt ihrer Randes, an ein Schaufelende beziehungsweise an eine Hauptströmungspfadberandung heranreicht und dort an oder stromauf der Hinterkante eines Teilprofils oder der Hinterkante der Schaufel endet, und somit nur der Schaufelschnitt direkt an der Hauptströmungspfadberandung einen reinen Einzelprofilschnitt darstellt. Dabei kann es günstig sein, wenn der Einzelprofilschnitt an der Hauptströmungspfadberandung dort einen Absatz aufweist, wo die Flankenfläche in die Kontur der Hauptströmungspfadberandung übergeht, wie es in Fig.6a unten dargestellt ist. Wie die Ansicht B-B zeigt, kann es erfindungsgemäß günstig sein, wenn sich Teilprofile einer Multiprofilgestaltkonfiguration in Strömungsrichtung überlappen und dem Durchlass auf diese Weise eine kanalartige, gegebenenfalls sogar düsenartige Form geben. Wie die Fig.6a oben zeigt, liegt dabei die Hinterkante HKT1 eines vorderen Teilprofils stromab der Vorderkante VKT2 eines hinteren Teilprofils. Es kann weiterhin vorteilhaft sein, wenn das Maß der Überlappung wenigstens in einem Teilabschnitt der Gesamtschaufel zur Hauptströmungspfadberandung des betreffenden Schaufelendes hin zunimmt. Wie in Fig.6a mit gepunkteter Linie gezeigt, kann die Hinterkante HKT1 eines vorderen Teilprofils in Richtung der Hauptströmungspfadberandung zunehmend weit stromabwärts der Vorderkante VKT2 eines hinteren Teilprofils verlaufen und entsprechend gekrümmt und zunehmend gegen die Meridianströmungsrichtung geneigt verlaufen.

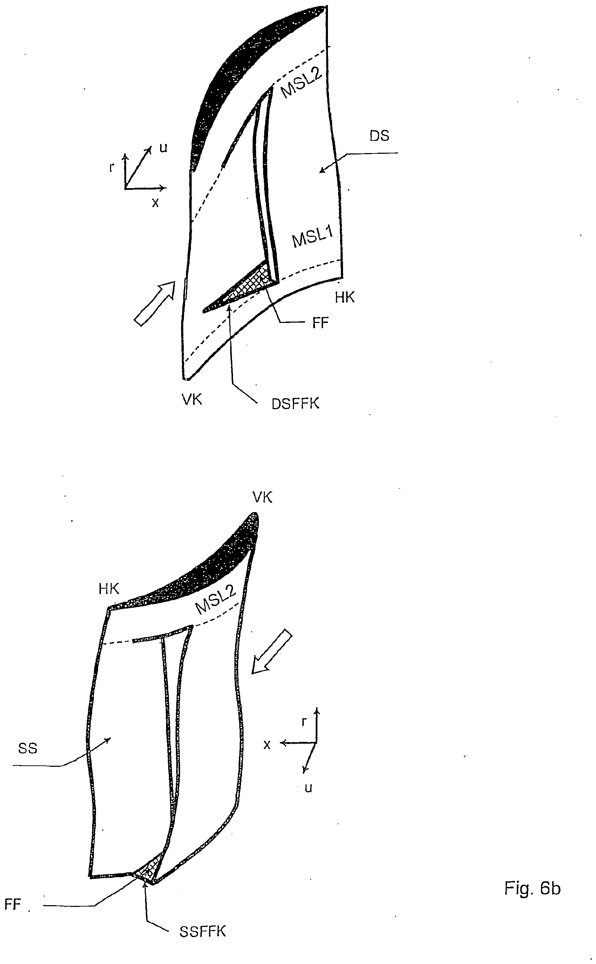

Die Fig.6b zeigt zwei räumliche Ansichten der erfindungsgemäßen Schaufel von Fig.6a. Die beiden räumlichen Ansichten lassen den Durchlass, die Multiprofilgestalt in der Zone des Durchlasses und die schraffiert dargestellte Flankenfläche FF erkennen. Auf der oberen Bildseite ist eine druckseitige Ansicht, auf der unteren Bildhälfte eine saugseitige räumliche Ansicht der Schaufel gegeben. Auf der Druckseite DS der Schaufel am inneren (hier unteren) Schaufelende ist deutlich die Kante der Flankenfläche DSFFK erkennbar, die ebenso wie die Flankenfläche FF selbst, gegen die Meridianstromlinienprofilschnitte der Schaufel, z..B. MSL1, geneigt vorgesehen ist und nicht bis zur Vorderkante eines Teilprofils reicht. In der saugseitigen Ansicht der Schaufel auf der unteren Bildseite ist die erfindungsgemäße Überlappung von Teilprofilen einer Multiprofilgestaltkonfiguration dargestellt. Die Überlappung nimmt zur (hier beispielhaft inneren) Hauptströmungspfadberandung hin zu. Die Flankenfläche FF mündet in die Fläche der Hauptströmungspfadberandung. Die entsprechende Mündungslinie bildet einen Rücksprung beziehungseise Absatz im Saugseitenverlauf des direkt an der Hauptströmungspfadberandung vorgesehenen Einzelprofils.

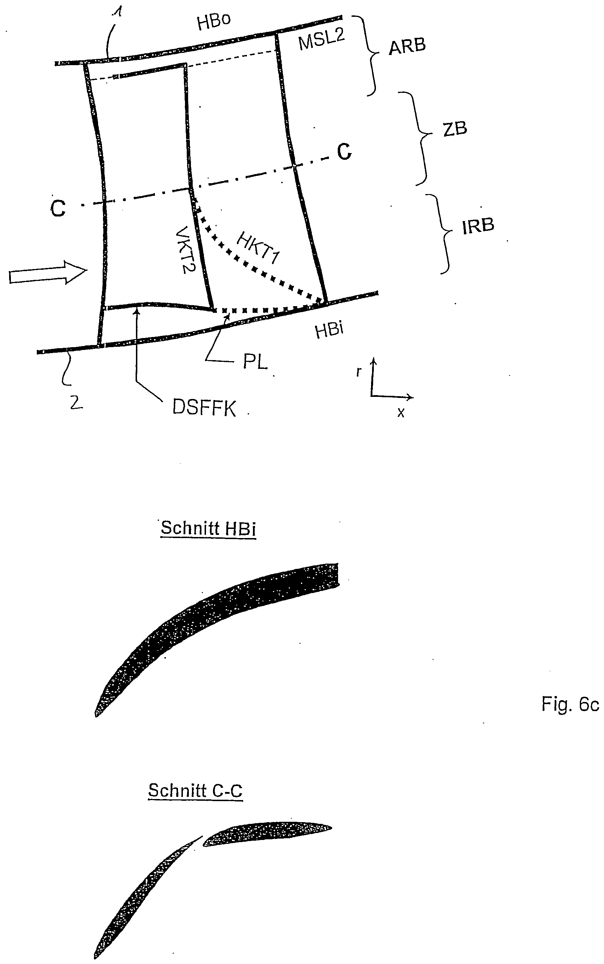

Die Fig.6c zeigt auf der oberen Bildseite eine nicht zur Erfindung gehörende Schaufel in der Meridianansicht (x-r-Ebene) mit Blick auf die Druckseite 6 der Schaufel. Die hier gezeigte Variante der Schaufel besitzt einen Verlauf der druckseitigen Kante DSFFK der Flankenfläche und/oder einen Verlauf der Flankenfläche FF selbst, der im Anfangsabschnitt im Wesentlichen zunächst in Meridianströmungsrichtung ausgerichtet ist und dann in Strömungsrichtung eine Neigung gegenüber der Meridianströmungsrichtung aufweist. Dabei kann es günstig sein, wenn zum Endabschnitt der FF hin die Neigung gegenüber der Meridianströmungsrichtung wieder abnimmt und innerhalb der FF entsprechend eine Kurve mit S-förmigem Verlauf vorgesehen ist. Die Fig.6c zeigt den Spezialfall einer Schaufel, bei der die Flankenfläche Teil einer Kegelfläche um die Maschinenachse ist und durch Projektion in die Meridianebene (x-r) eine einheitliche Linie, die Projektionslinie PL ergibt (im Bild oben gepunktet dargestellt und die DSFFK mit einschließend). Die Fig.6c zeigt den Spezialfall einer Schaufel, bei der die Flankenfläche FF die Flankenfläche mit einem Abschnitt ihres Randes an der Hauptströmungspfadberandung des betreffenden Schaufelendes liegt und die Hinterkante eines Teilprofils oder die Hinterkante der Schaufel berührt. Wenn die FF bis an die Hinterkante eines Teilprofils reicht, liegt entsprechend direkt an der Hauptströmungspfadberandung ein Einzelprofil mit dicker Hinterkante vor.

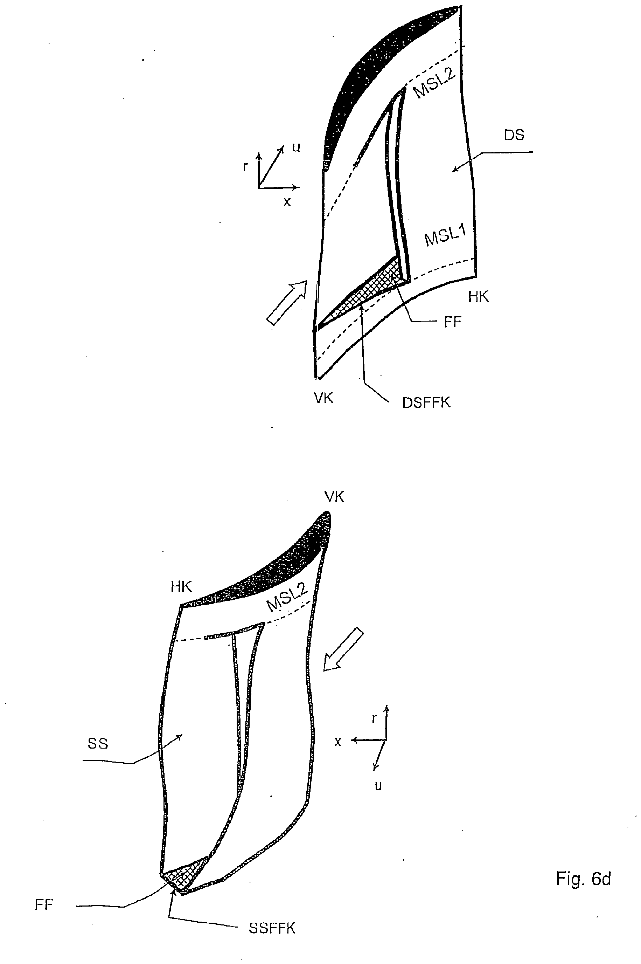

Die Fig.6d zeigt die zugehörigen räumlichen Ansichten der Schaufel von Fig.6c.
Die in den Figuren 5a bis 6d aus Gründen der Deutlichkeit als scharf dargestellten Kanten der Flankenflächen und der Teilprofile können erfindungsgemäß, wie alle anderen Kanten oder Ecken konventioneller Schaufel, auch abgerundet beziehungsweise mit Ausrundungsradius gestaltet sein.

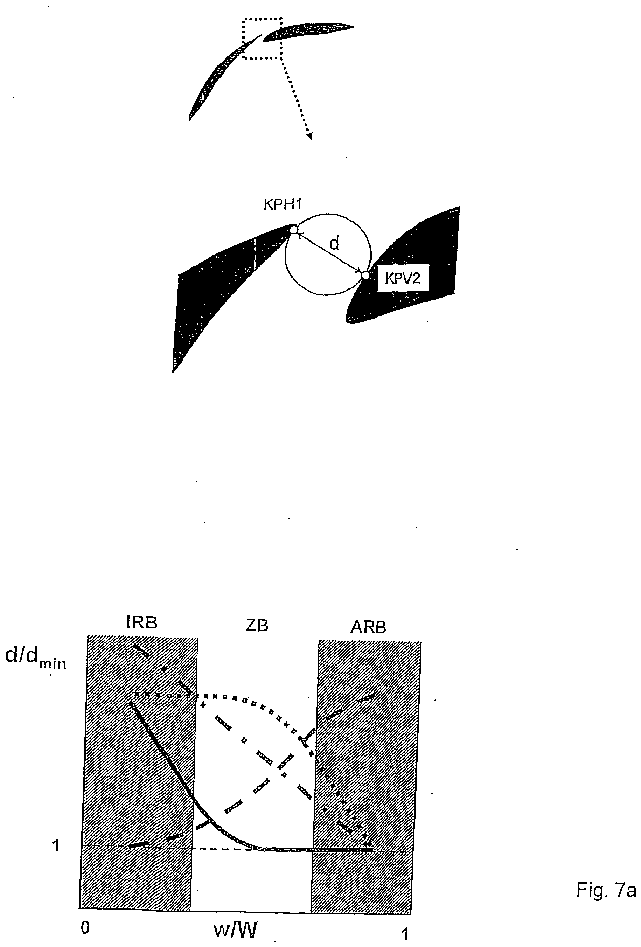

Die Fig.7a zeigt die erfindungsgemäße Wahl der Weite des Durchlasses im Bereich der Multiprofilgestalt. Im Bild ganz oben ist ein Schaufelschnitt mit Multiprofilgestalt (hier 2 Teilprofile) dargestellt. Die Region um die Hinterkante des vorderen und um die Vorderkante des hinteren Teilprofils ist mit einem kleinen Fenster markiert und im Bild in der Mitte vergrößert dargestellt. Deutlich erkennbar ist der Durchlass zwischen den Teilprofilen. Auf einem festen Radius, d.h. bei einem festen Abstand zur Achse der Strömungsmaschine, lässt sich zwischen den Teilprofilen die örtlich kleinste auftretende Durchlassweite d ermitteln. Dies geschieht durch Bestimmung des kleinsten auf dem gegebenen Radius zwischen den beiden Profilen einbeschreibbaren Kreises und Messung seines Durchmessers d. Dabei liegen die Kontaktpunkte des Kreises mit den Profilen (KPH1 nahe der Hinterkante eines vorderen Teilprofils und KPV2 nahe der Vorderkante eines hinteren Teilprofils) jeweils auf demselben Radius. Verwendet man diese Methode entlang der Schaufelhöhe auf all den Radien, auf denen Multiprofilgestalt vorliegt, so erhält man die radiale Verteilung der Durchlassweite d, die dimensionslos bezogen auf den gefundenen Minimalwert dmin, in der rechten Bildhälfte über der Schaufelhöhe w, dimensionslos gemacht mit der Weite des Hauptströmungspfades W, als d/dmin = fkt(w/W) dargestellt ist. Erfindungsgemäß ist die maximale Durchlassweite in einem der Schaufelrandbereiche IRB und ARB vorgesehen. Es kann erfindungsgemäß vorteilhaft sein, wenn dabei die minimale Durchlassweite in dem anderen der Schaufelrandbereiche IRB und ARB vorgesehen ist. Zwischen dem Ort der maximalen Durchlassweite und dem Ort der minimalen Durchlassweite kann eine im Wesentlichen oder exakt lineare Verteilung vorgesehen sein. Ebenfalls erfindungsgemäß ist eine Verteilung der Durchlassweite, die zwischen dem Ort der maximalen Durchlassweite und dem Ort der minimalen Durchlassweite S-förmig verläuft. Ebenfalls erfindungsgemäß ist eine Verteilung der Durchlassweite, die zwischen einem Ort im Zentralbereich ZB und dem Ort der minimalen Durchlassweite im Wesentlichen oder exakt konstant verläuft. Ebenfalls erfindungsgemäß ist eine Verteilung der Durchlassweite, die zwischen dem Ort der maximalen Durchlassweite und einem Ort im Zentralbereich ZB im Wesentlichen oder exakt konstant verläuft.

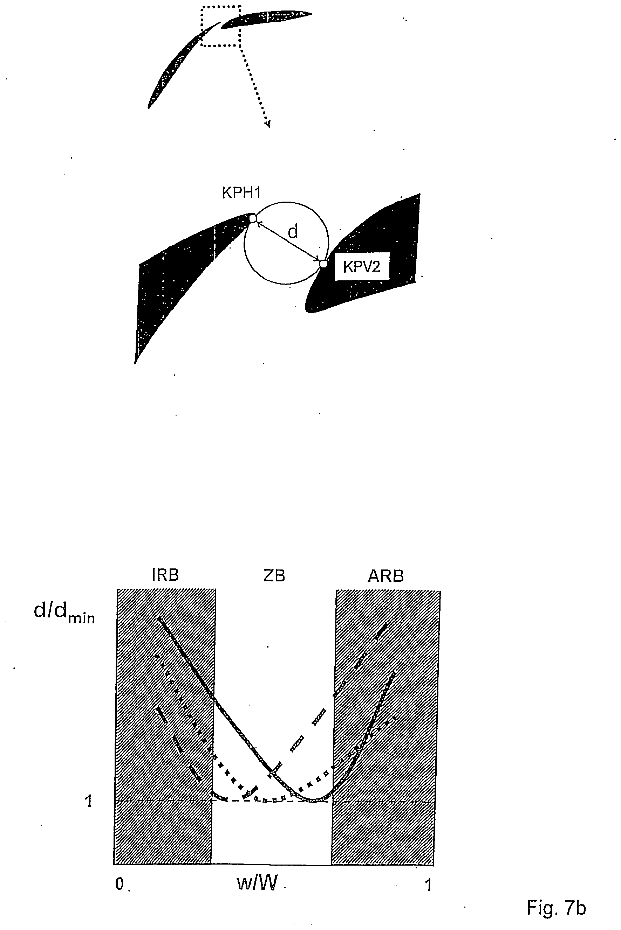

Die Fig.7b zeigt ähnlich wie Fig.7a weitere erfindungsgemäße Verteilungen der Weite des Durchlasses im Bereich der Multiprofilgestalt. Erfindungsgemäß ist die maximale Durchlassweite in einem der Schaufelrandbereiche IRB und ARB vorgesehen während die minimale Durchlassweite im Zentralbereich ZB vorgesehen ist. Erfindungsgemäß günstig ist es, wenn die Durchlassweite in beiden Schaufelrandbereichen IRB und ARB Werte über dem Minimalwert annimmt.

Es ist vorteilhaft, wenn der Maximalwert der Durchlassweite wenigstens um den Faktor 1,5 größer ist als der Minimalwert der Durchlassweite, gemäß dmax/dmin > 1,5.

### Bezuaszeichenliste

- 1: Gehäuse
- 2: Nabe
- 3: Maschinenachse
- 4: Schaufelreihe
- 5: Saugseite
- 6: Druckseite
- 7: Frontprofil
- 8: Durchlass
- 9: erstes Nach-Profil
- 10: zweites Nach-Profil
- 11: Rotor
- 12: Stator
- 13: Hauptströmungspfad
- 14: mittlere Meridianstromlinie

## Patentansprüche

1. Strömungsmaschine mit einem Hauptströmungspfad (13), der eine Hauptströmungspfadweite (W) aufweist, mit einer inneren und einer äußeren Hauptströmungspfadberandung sowie mit zumindest einer, in dem Hauptströmungspfad (13) angeordneten, durch Schaufeln gebildeten Rotor- oder Statorreihe mit hybrider Profilgestaltung, wobei die Schaufeln in Richtung ihrer Schaufelhöhe in den inneren Randbereich IRB, gegeben zwischen der inneren Hauptströmungspfadberandung HBi und einem nahe gelegenen inneren Meridianstromlinienprofilschnitt MSLi, den äußeren Randbereich ARB, gegeben zwischen der äußeren Hauptströmungspfadberandung HBo und einem nahegelegenen äußeren Meridianstromlinienprofilschnitt MSLo, und in den Zentralbereich, gegeben zwischen dem inneren Meridianstromlinienprofilschnitt MSLi und dem äußeren Meridianstromlinienprofilschnitt MSLo, unterteilt sind,
- wobei wenigstens einer der Meridianstromlinienprofilschnitte MSLi und MSLo in einem Abstand von maximal 35% der Hauptströmungspfadweite von der jeweiligen Hauptströmungspfadberandung vorgesehen ist,
- wobei die Schaufeln in wenigstens Teilen des Zentralbereiches eine Multiprofilgestalt aufweisen, derart, dass mindestens zwei in Strömungsrichtung hintereinander angeordnete Teilprofile (7, 9, 10) vorgesehen sind, von denen jedes einzelne im Wesentlichen die Form eines Schaufelprofils besitzt,
- wobei jeweils zwischen zwei Teilprofilen ein Durchlass (8) ausgebildet ist, der von der Schaufeldruckseite zur Schaufelsaugseite von Fluid durchströmt wird,
- wobei wenigstens ein Durchlass (8) entlang der Schaufelhöhe eine veränderliche Durchlassweite d aufweist,
- wobei ein örtlicher Wert der Durchlassweite d durch den kleinsten zwischen den Konturen zweier benachbarter Teilprofile auf demselben Radius durch Einbeschreibung eines Kreises bestimmbaren Abstand gemessen wird,
- wobei der Verlauf der Durchlassweite d entlang der Schaufelhöhe in wenigstens einem der inneren und äußeren Randbereiche IRB und ARB ein Maximum annimmt,
- wobei in wenigstens einem der inneren und äußeren Randbereiche IRB und ARB, bei Betrachtung der Schaufelprofilschnittgeometrie in Richtung der an den jeweiligen Randbereich (IRB oder ARB) angrenzenden Hauptströmungspfadberandung, ein Wechsel von der Multiprofilgestalt zur Einzelprofilgestalt vorgesehen ist und der mindestens eine Durchlass (8) am Ort des Wechsels begrenzt durch eine Flankenfläche FF endet,
- wobei ein Teil des Randes der Flankenfläche FF als eine Kante SSFFK auf der Saugseite (5) der Schaufel ausgebildet ist,
- wobei ein Teil des Randes der Flankenfläche FF als eine Kante DSFFK auf der Druckseite (6) der Schaufel ausgebildet ist und zwischen der druckseitigen Flankenflächenkante DSFFK und der Hauptströmungspfadberandung ein Abstand von größer null vorgesehen ist,
- wobei wenigstens einer der Randbereiche IRB und ARB an einem festen mit Deckband oder Schaufelfuß versehenen Schaufelende vorgesehen ist,
**dadurch gekennzeichnet,**
- **dass** die saugseitige Flankenflächenkante SSFFK wenigstens teilweise näher an der Hauptströmungspfadberandung des betreffenden Randbereiches (IRB oder ARB) angeordnet ist, als die druckseitige Flankenflächenkante DSFFK und auf diese Weise ein gegen die Umfangsrichtung u und/oder gegen die Meridianrichtung m und in Strömungsrichtung zur Hauptströmungspfadrandung hin geneigter Verlauf der Flankenfläche FF gegeben ist.

2. Strömungsmaschine nach Anspruch 1, **dadurch gekennzeichnet, dass** wenigstens einer der Meridianstromlinienprofilschnitte MSLi und MSLo in einem Abstand von maximal 20% der Hauptströmungspfadweite von der jeweiligen Hauptströmungspfadberandung vorgesehen ist.

3. Strömungsmaschine nach Anspruch 1 oder 2, **dadurch gekennzeichnet, dass** bei Betrachtung der Schaufel entlang ihrer Schaufelhöhe der Wechsel von der Multiprofilgestalt zur Einzelprofilgestalt so verläuft, dass die Profilkontur des Einzelprofils die Teilprofile der Multiprofilanordnung einhüllt und wenigstens teilweise gemeinsame Konturabschnitte mit den Teilprofilen der Multiprofilanordnung bildet.

4. Strömungsmaschine nach Anspruch 1 oder 2, **dadurch gekennzeichnet, dass** bei Betrachtung der Schaufel entlang ihrer Schaufelhöhe der Wechsel von der Multiprofilgestalt zur Einzelprofilgestalt so verläuft, dass wenigstens eine der Hinter- und Vorderkanten der Teilprofile der Multiprofilanordnung über die Profilkontur des Einzelprofils hinausragt.

5. Strömungsmaschine nach einem der Ansprüche 1 bis 4, **dadurch gekennzeichnet, dass** eine der Flankenflächenkanten SSFFK und DSFFK im Wesentlichen oder exakt in einem Meridianstromlinienprofilschnitt vorgesehen ist.

6. Strömungsmaschine nach einem der Ansprüche 1 bis 5, **dadurch gekennzeichnet, dass** die saugseitige Flankenflächenkante SSFFK wenigstens teilweise an der Hauptströmungspfadberandung stromauf einer Hinterkante oder an einer Hinterkante eines Teilprofils vorgesehen ist und somit in dem betreffenden Randbereich (IRB oder ARB) allein im Meridianstromlinienprofilschnitt direkt an der Hauptströmungspfadberandung eine Einzelprofilgestalt ausgebildet ist.

7. Strömungsmaschine nach einem der Ansprüche 1 bis 6, **dadurch gekennzeichnet, dass** wenigstens ein Abschnitt einer der Flankenflächenkanten DSFFK und SSFFK sich in Strömungsrichtung einer Hauptströmungspfadberandung nähert und somit gegenüber Meridianstromlinienprofilschnitten der Schaufel geneigt ausgebildet ist.

8. Strömungsmaschine nach einem der Ansprüche 1 bis 7, **dadurch gekennzeichnet, dass** der Verlauf der druckseitigen Flankenflächenkante DSFFK bei Betrachtung in Strömungsrichtung
a.) einen ersten Abschnitt aufweist, in dem die druckseitige Flankenflächenkante DSFFK im Wesentlichen oder exakt entlang eines Meridianstromlinienprofilschnitts vorgesehen ist,
b.) einen zweiten sich an den ersten in Strömungsrichtung anschliessenden Abschnitt aufweist, in dem die druckseitige Flankenflächenkante DSFFK gegenüber der Meridianströmungsrichtung geneigt vorgesehen ist und sich dabei der Hauptströmungspfadberandung, an die der die druckseitige Flankenflächenkante DSFFK enthaltende Randbereich (IRB oder ARB) grenzt, nähert.

9. Strömungsmaschine nach einem der Ansprüche 1 bis 8 **dadurch gekennzeichnet, dass** die druckseitige Flankenflächenkante DSFFK in der unmittelbaren Nähe oder direkt an der Vorderkante eines Teilprofils beziehungsweise an der Vorderkante der Schaufel beginnt.

10. Strömungsmaschine nach einem der Ansprüche 1 bis 9, **dadurch gekennzeichnet, dass** die saugseitige Flankenflächenkante DSFFK in der unmittelbaren Nähe oder direkt an der Vorderkante eines Teilprofils beziehungsweise an der Vorderkante der Schaufel beginnt.

11. Strömungsmaschine nach einem der Ansprüche 1 bis 10, **dadurch gekennzeichnet, dass** die Multiprofilgestalt eine Anordnung mit wenigstens zwei Teilprofilen umfasst, wobei ein meridionaler Abstand Am zwischen der Hinterkante eines Teilprofils und der Vorderkante des stromab benachbart angeordneten Teilprofils gegeben ist, wobei der meridionale Abstand Am in wenigstens einem Teil der Hauptströmungspfadweite mit negativen Werten vorgesehen ist und auf diese Weise benachbarte Teilprofile in Meridianströmungsrichtung eine Überlappung aufweisen und eine kanalartige Strömungspassage zwischen sich bilden, wobei die Überlappung wenigstens in einem Teilabschnitt der Schaufel zur Hauptströmungspfadberandung des betreffenden Schaufelendes hin zunehmend vorgesehen ist und entsprechend die Hinterkante HKT1 eines vorderen Teilprofils in Richtung der Hauptströmungspfadberandung zunehmend weit stromabwärts der Vorderkante VKT2 eines hinteren Teilprofils verläuft.

12. Strömungsmaschine nach Anspruch 11, **dadurch gekennzeichnet, dass** die Überlappung ausgehend von einem Ort im Zentralbereich ZB der Schaufel in Richtung wenigstens eines Schaufelendes bis zum Ort des Wechsels von Multiprofilgestalt zur Einzelprofilgestalt abnehmend vorgesehen ist.

13. Strömungsmaschine nach einem der Ansprüche 1 bis 12, **dadurch gekennzeichnet, dass** die saugseitige Flankenflächenkante SSFFK derart an der Hauptströmungspfadberandung vorgesehen ist, dass der Meridianstromlinienprofilschnitt der Schaufel direkt an der Hauptströmungspfadberandung an einem Ort stromauf oder direkt an der Hinterkante eines Teilprofils beziehungsweise der Schaufel einen Rücksprung aufweist.

14. Strömungsmaschine nach einem der Ansprüche 1 bis 13, **dadurch gekennzeichnet, dass** die Verteilung der Durchlassweite d/dmin = fkt(w/W) im Zentralbereich ZB ein Minimum besitzt.

15. Strömungsmaschine nach einem der Ansprüche 1 bis 14, **dadurch gekennzeichnet, dass** der Maximalwert der Durchlassweite um wenigstens den Faktor 1,5 größer ist als der Minimalwert der Durchlassweite, gemäß dmax/dmin > 1,5.

## Claims

1. Fluid-flow machine with a main flow path (13) having a main flow path width (W), with an inner and an outer main flow path boundary and with at least one rotor or stator row with hybrid profile configuration arranged in the main flow path (13) and formed by blades, wherein the blades are split in the direction of their blade height into the inner boundary area IRB defined between the inner main flow path boundary HBi and a nearby inner meridional flow line profile section MSLi, the outer boundary area ARB defined between the outer main flow path boundary HBo and a nearby outer meridional flow line profile section MSLo, and the central area defined between the inner meridional flow line profile section MSLi and the outer meridional flow line profile section MSLo,
- wherein at least one of the meridional flow line profile sections MSLi and MSLo is provided at a distance of max. 35% of the main flow path width from the respective main flow path boundary,
- wherein the blades have in at least parts of the central area a multi-profile configuration such that at least two partial profiles (7, 9, 10) arranged one behind the other in the flow direction are provided, of which each has substantially the shape of a blade profile,
- wherein a passage (8) is provided between each two partial profiles and is passed through by fluid from the blade pressure side to the blade suction side,
- wherein at least one passage (8) has, along the blade height, a variable passage width d,
- wherein a local value of the passage width d is measured by the smallest distance that can be determined by inscribing a circle between the contours of two adjacent partial profiles on the same radius,
- wherein the development of the passage width d along the blade height assumes a maximum value in at least one of the inner and outer boundary areas IRB and ARB,
- wherein in at least one of the inner and outer boundary areas IRB and ARB, a changeover from the multi-profile configuration to the single-profile configuration is provided when viewing the blade profile section geometry in the direction of the main flow path boundary adjoining the respective boundary area (IRB or ARB) and the at least one passage (8) ends at the point of changeover confined by a flank surface FF,
- wherein a part of the edge of the flank surface FF is designed as an SSFFK edge on the blade suction side (5),
- wherein a part of the edge of the flank surface FF is designed as a DSFFK edge on the blade pressure side (6) and a distance greater than zero is provided between the pressure-side flank surface edge DSFFK and the main flow path boundary,
- wherein at least one of the boundary areas IRB and ARB is provided at a fixed blade end provided with shroud or blade root,
**characterized in that**
the suction-side flank surface edge SSFFK is at least partially closer to the main flow path boundary of the respective boundary area (IRB or ARB) than the pressure-side flank surface edge DSFFK, resulting in a course of the flank surface FF inclined relative to the circumferential direction u and/or the meridional direction m and - in the flow direction - to the main flow path boundary.

2. Fluid-flow machine in accordance with Claim 1, **characterized in that** at least one of the meridional flow line profile sections MSLi and MSLo is provided at a distance of max. 20% of the main flow path width from the respective main flow path boundary.

3. Fluid-flow machine in accordance with Claim 1 or 2, **characterized in that** when viewing the blade along its blade height the changeover from the multi-profile configuration to the single-profile configuration is such that the profile contour of the single profile encloses the partial profiles of the multi-profile arrangement and forms at least partially joint contour sections with the partial profiles of the multi-profile arrangement.

4. Fluid-flow machine in accordance with Claim 1 or 2, **characterized in that** when viewing the blade along its blade height the changeover from the multi-profile configuration to the single-profile configuration is such that at least one of the trailing and leading edges of the partial profiles of the multi-profile arrangement projects beyond the profile contour of the single profile.

5. Fluid-flow machine in accordance with one of the Claims 1 to 4, **characterized in that** one of the flank surface edges SSFFK and DSFFK is provided substantially or exactly in a meridional flow line profile section.

6. Fluid-flow machine in accordance with one of the Claims 1 to 5, **characterized in that** the suction-side flank surface edge SSFFK is at least partially provided at the main flow path boundary upstream of a trailing edge or at a trailing edge of a partial profile and that thus a single profile configuration is provided in the respective boundary area (IRB or ARB) only in the meridional flow line profile section directly at the main flow path boundary.

7. Fluid-flow machine in accordance with one of the Claims 1 to 6, **characterized in that** at least one section of one of the flank surface edges DSFFK and SSFFK approaches in the flow direction a main flow path boundary and is thus inclined relative to meridional flow line profile sections of the blade.

8. Fluid-flow machine in accordance with one of the Claims 1 to 7, **characterized in that** the course of the pressure-side flank surface edge DSFFK, when viewed in the flow direction,
a) features a first section, in which the pressure-side flank surface edge DSFFK is substantially or exactly provided along a meridional flow line profile section,
b) features a second section adjoining the first one in the flow direction, in which the pressure-side flank surface edge DSFFK is provided inclined relative to the meridional flow direction and thereby approaches the main flow path boundary adjoined by the boundary area (IRB or ARB) including the pressure-side flank surface edge DSFFK.

9. Fluid-flow machine in accordance with one of the Claims 1 to 8, **characterized in that** the pressure-side flank surface edge DSFFK starts in the immediate vicinity of or directly at the leading edge of a partial profile, or at the leading edge of the blade, respectively.

10. Fluid-flow machine in accordance with one of the Claims 1 to 9, **characterized in that** the suction-side flank surface edge SSFFK starts in the immediate vicinity of or directly at the leading edge of a partial profile, or at the leading edge of the blade, respectively.

11. Fluid-flow machine in accordance with one of the Claims 1 to 10, **characterized in that** the multi-profile configuration includes an arrangement with at least two partial profiles, wherein a meridional distance Am between the trailing edge of a partial profile and the leading edge of the adjacently arranged downstream partial profile is defined, wherein the meridional distance Am in at least one part of the main flow path width is provided with negative values and thus adjacent partial profiles overlap in the meridional flow direction and form a duct-like flow passage between them, wherein the overlap at least in a partial section of the blade increases towards the main flow path boundary of the respective blade end, and the trailing edge HKT1 of a front partial profile extends in the direction of the main flow path boundary increasingly far downstream of the leading edge VKT2 of a rear partial profile.

12. Fluid-flow machine in accordance with Claim 11, **characterized in that** a decreasing overlap is provided, starting from a point in the central area ZB of the blade and extending in the direction of at least one blade end up to the point of changeover from the multi-profile configuration to the single-profile configuration.

13. Fluid-flow machine in accordance with one of the Claims 1 to 12, **characterized in that** the suction-side flank surface edge SSFFK is provided at the main flow path boundary such that the meridional flow line profile section of the blade features a ledge directly on the main flow path boundary at a point upstream of or directly at the trailing edge of a partial profile or of the blade, respectively.

14. Fluid-flow machine in accordance with one of the Claims 1 to 13, **characterized in that** the distribution of the passage width d/dmin = fkt (w/W) is at a minimum in the central area ZB.

15. Fluid-flow machine in accordance with one of the Claims 1 to 14, **characterized in that** the maximum value of the passage width is greater than the minimum value of the passage width by at least the factor 1.5, in accordance with dmax/dmin > 1.5.

## Revendications

1. Machine à écoulement avec une voie d'écoulement principale (13) qui présente une largeur de voie d'écoulement principale (W) avec une bordure intérieure et une bordure extérieure de la voie d'écoulement principale ainsi qu'avec au moins une rangée de rotor ou de stator, avec configuration hybride du profil, formée par des aubes et disposée dans la voie d'écoulement principale, sachant que les aubes sont divisées dans le sens de leur hauteur d'aube en la zone marginale intérieure IRB, définie entre la bordure intérieure de la voie d'écoulement principale HBi et une coupe de profil intérieure de la ligne du flux méridional MSLi proche, en la zone marginale extérieure ARB, définie entre la bordure extérieure de la voie d'écoulement principale HBo et une coupe de profil extérieure de la ligne du flux méridional MSLo proche, et la zone centrale définie entre la coupe de profil intérieure de la ligne du flux méridional MSLi et la coupe de profil extérieure de la ligne du flux méridional MSLo,
- sachant qu'au moins une des coupes de profil de la ligne du flux méridional MSLi et MSLo est prévue à une distance de 35 % maximum de la largeur de la voie d'écoulement principale par rapport à la bordure de la voie d'écoulement principale respective,
- sachant que les aubes présentent une configuration multi-profils dans au moins des parties de la zone centrale, de sorte que sont prévus au moins deux profils partiels (7, 9, 10) disposés l'un derrière l'autre dans le sens d'écoulement et dont chacun possède essentiellement la forme d'un profil d'aube,
- sachant qu'un passage (8) est constitué respectivement entre deux profils partiels, lequel est traversé par du fluide, du côté refoulement de l'aube au côté aspiration de l'aube,
- sachant qu'au moins un passage (8) présente, le long de la hauteur d'aube, une largeur de passage d variable,
- sachant qu'une valeur locale de la largeur de passage d est mesurée par le biais de la plus petite distance déterminable en décrivant un cercle entre les contours de deux profils partiels adjacents sur le même rayon,
- sachant que le tracé de la largeur de passage d le long de la hauteur d'aube atteint un maximum dans au moins une des zones marginales intérieures et extérieures IRB et ARB,
- sachant que dans au moins une des zones marginales intérieures et extérieures IRB et ARB, un changement de la configuration multi-profils vers la configuration à profil unique est prévu lorsque l'on observe la géométrie de la coupe de profil d'aube dans le sens de la bordure de la voie d'écoulement principale avoisinant la zone marginale respective (IRB ou ARB) et que ledit au moins un passage (8) se termine au point du changement, limité par une surface de flanc FF,
- sachant qu'une partie de la bordure de la surface de flanc FF est conçue sous forme de bord SSFFK sur le côté aspiration (5) de l'aube,
- sachant qu'une partie de la bordure de la surface de flanc FF est conçue sous forme de bord DSFFK sur le côté refoulement (6) de l'aube et qu'une distance supérieure à zéro est prévue entre le bord de la surface de flanc côté refoulement DSFFK et la bordure de la voie d'écoulement principale,
- sachant qu'au moins une des zones marginales IRB et ARB est prévue à une extrémité fixe de l'aube, pourvue d'une virole ou d'un pied d'aube,
**caractérisée en ce que**
- le bord de la surface de flanc côté aspiration SSFFK est disposé au moins partiellement plus près de la bordure de la voie d'écoulement principale de la zone marginale respective (IRB ou ARB) que le bord de la surface de flanc côté refoulement DSFFK et qu'ainsi est formé un tracé de la surface de flanc FF incliné par rapport au sens circonférentiel u et/ou au sens méridional m et, dans le sens d'écoulement, par rapport à la bordure de la voie d'écoulement principale.

2. Machine à écoulement selon la revendication n° 1, **caractérisée en ce qu'**au moins une des coupes de profil de la ligne du flux méridional MSLi et MSLo est prévue à une distance de 20 % maximum de la largeur de la voie d'écoulement principale par rapport à la bordure de la voie d'écoulement principale respective.

3. Machine à écoulement selon la revendication n° 1 ou n° 2, **caractérisée en ce que** lorsque l'on observe l'aube le long de sa hauteur d'aube, le changement de la configuration multi-profils vers la configuration à profil unique s'opère de telle façon que le contour du profil unique enveloppe les profils partiels de la disposition multi-profils et forme au moins partiellement des sections de contour communes aux profils partiels de la disposition multi-profils.

4. Machine à écoulement selon la revendication n° 1 ou n° 2, **caractérisée en ce que** lorsque l'on observe l'aube le long de sa hauteur d'aube, le changement de la configuration multi-profils vers la configuration à profil unique s'opère de telle façon qu'au moins un des bords de fuite et d'attaque des profils partiels de la disposition multi-profils dépasse du contour du profil unique.

5. Machine à écoulement selon une des revendications n° 1 à n° 4, **caractérisée en ce qu'**est prévu un des bords de la surface de flanc SSFFK et DSFFK essentiellement ou exactement dans une coupe de profil de la ligne du flux méridional.

6. Machine à écoulement selon une des revendications n° 1 à n° 5, **caractérisée en ce qu'**est prévu le bord de la surface de flanc côté aspiration SSFFK au moins partiellement sur la bordure de la voie d'écoulement principale en amont d'un bord de fuite ou sur un bord de fuite d'un profil partiel et qu'est constituée ainsi, dans la zone marginale respective (IRB ou ARB), une configuration à profil unique exclusivement dans la coupe de profil de la ligne du flux méridional directement sur la bordure de la voie d'écoulement principale.

7. Machine à écoulement selon une des revendications n° 1 à n° 6, **caractérisée en ce qu'**au moins une section d'un des bords de la surface de flanc DSFFK et SSFFK se rapproche d'une bordure de la voie d'écoulement principale dans le sens d'écoulement et qu'elle est constituée ainsi inclinée par rapport aux coupes de profil de la ligne du flux méridional de l'aube.

8. Machine à écoulement selon une des revendications n° 1 à n° 7, **caractérisée en ce que** le tracé du bord de la surface de flanc côté refoulement DSFFK présente, lorsqu'on l'observe dans le sens d'écoulement,
a) une première section dans laquelle le bord de la surface de flanc côté refoulement DSFFK est prévu essentiellement ou exactement le long d'une coupe de profil de la ligne du flux méridional,
b) une seconde section jouxtant la première dans le sens d'écoulement, dans laquelle le bord de surface de flanc côté refoulement DSFFK est incliné par rapport au sens d'écoulement méridional et s'approche alors de la bordure de la voie d'écoulement principale qu'avoisine la zone marginale (IRB ou ARB) contenant le bord de surface de flanc côté refoulement DSFFK.

9. Machine à écoulement selon une des revendications n° 1 à n° 8, **caractérisée en ce que** le bord de surface de flanc côté refoulement DSFFK commence à proximité immédiate ou directement sur le bord d'attaque d'un profil partiel ou sur le bord d'attaque de l'aube.

10. Machine à écoulement selon une des revendications n° 1 à n° 9, **caractérisée en ce que** le bord de surface de flanc côté aspiration SSFFK commence à proximité immédiate ou directement sur le bord d'attaque d'un profil partiel ou sur le bord d'attaque de l'aube.

11. Machine à écoulement selon une des revendications n° 1 à n° 10, **caractérisée en ce que** la configuration multi-profils comprend une disposition avec au moins deux profils partiels, sachant qu'est définie une distance méridionale Am entre le bord de fuite d'un profil partiel et le bord d'attaque du profil partiel adjacent en aval, sachant que la distance méridionale Am est prévue avec des valeurs négatives dans au moins une partie de la largeur de la voie d'écoulement principale et que de cette façon, des profils partiels adjacents dans le sens d'écoulement méridional présentent un chevauchement et forment un passage d'écoulement en forme de canal placé entre eux, sachant que le chevauchement est croissant en direction de la bordure de la voie d'écoulement principale de l'extrémité d'aube respective dans au moins une section partielle de l'aube et que le bord de fuite HKT1 d'un profil partiel avant s'étend dans le sens de la bordure de la voie d'écoulement principale de plus en plus loin en aval du bord d'attaque VKT2 d'un profil partiel arrière.

12. Machine à écoulement selon la revendication n° 11, **caractérisée en ce que** le chevauchement est prévu décroissant, partant d'un point dans la zone centrale ZB de l'aube dans le sens d'au moins une extrémité d'aube jusqu'au point de changement de la configuration multi-profils vers la configuration à profil unique.

13. Machine à écoulement selon une des revendications n° 1 à n° 12, **caractérisée en ce que** le bord de la surface de flanc côté aspiration SSFFK est prévu de telle sorte sur la bordure de la voie d'écoulement principale que la coupe de profil de la ligne de flux méridional de l'aube présente un retrait directement sur la bordure de la voie d'écoulement principale à un point en amont ou directement sur le bord de fuite d'un profil partiel ou de l'aube.

14. Machine à écoulement selon une des revendications n° 1 à n° 13, **caractérisée en ce que** la distribution de la largeur de passage d/dmin = fkt (w/W) dans la zone centrale ZB possède un minimum.

15. Machine à écoulement selon une des revendications n° 1 à n° 14, **caractérisée en ce que** la valeur maximale de la largeur du passage est supérieure à la valeur minimale de la largeur de passage, d'au moins le facteur 1,5, tel que dmax/dmin > 1,5.
